# EUROPEAN PATENT SPECIFICATION

(11) **EP 4 220 281 B1**
(45) Date of publication and mention of the grant of the patent: **26.11.2025**
(21) Application number: 22382077.0
(22) Date of filing: 31.01.2022
(51) Int. Cl.: G02B 27/18, F21V 5/00, G02B 19/00

(54) **OPTICAL SYSTEM**
OPTISCHES SYSTEM
SYSTÈME OPTIQUE

(43) Date of publication of application: 02.08.2023
(73) Proprietor: Quality Photonics Optics S.L. (QPO), 08221 Terrassa (ES)
(72) Inventor: Pizarro Bondia, Carles, 08221 Terrassa (ES); Blanco Nieto, Patricia, 08221 Terrassa (ES); Gámez Soberbio, Daniel, 08221 Terrassa (ES); Santos Vives, Pau, 08221 Terrassa (ES); Álvarez Domínguez, Noemí, 08221 Terrassa (ES)
(74) Representative: Curell Suñol S.L.P.

(56) References cited:
- WO-A1-2015/025028
- WO-A1-2016/165315
- KR-U- 20200 000 567
- US-A1- 2018 203 338
- SHEN MO ET AL: "P-154: Reflective Fly Eye Condenser Design for LED Illuminating Projection System", 2005 SID INTERNATIONAL SYMPOSIUM. BOSTON, MA, MAY 24 - 27, 2005; [SID INTERNATIONAL SYMPOSIUM], SAN JOSE, CA : SID, US, vol. XXXVI, 24 May 2005 (2005-05-24), pages 888 - 891, XP007012577

## Description

### Field of the Invention

The present invention belongs generally to the field of illumination, and preferably to the field of projector devices which provide uniform light distribution on the illuminated area from a light source, i.e., one or more light-emitting diodes (LEDs). A specific object (for example, a transparency) can thus be projected on a screen, for example.

The invention relates to an optical system with an entry surface for the entry of a light beam originating from a light source and an exit surface for the exit of the light beam. The optical system defines an optical axis extending from the entry surface to the exit surface. Light, originating from an optical center arranged on the optical axis, enters the optical system through the entry surface and propagates through the optical system to the exit surface.

### State of the Art

A good projection system must combine a high light capturing efficiency and a uniform illumination in the area of the image modulator. There are systems which are capable of achieving this objective by using multiple optical light-capturing elements and a separate homogenizing module, but these systems represent difficult situations in terms of assembly minimization, optical set-up and alignment, and production cost.

Projectors generally consist of an objective lens (a converging lens system) which projects an object, usually a transparency, on a screen. One of the objectives to be achieved when designing a projector is the uniform illumination of the object to be projected. One possibility consists of using an illumination source such as a LED, for example, and projecting the image of the LED on the transparency by means of a lens referred to as a condenser. In this illumination system referred to as critical illumination, the image of the LED appears on the screen, with an uneven illumination. Another possibility known as the Köhler illumination system consists of forming the image of the LED on the objective lens with the help of the condenser lens. The transparency is placed next to the condenser. Therefore, the LED is not projected on the screen and the transparency receives more uniform light.

Miniaturized projection systems which use a complex system of optical components including, among others, the so-called "fly-eye", the main purpose of which is to make the condenser smaller, are also known. A "fly-eye" is a two-dimensional array of individual optical elements assembled or formed into a single optical assembly and used to spatially transform light from a non-uniform distribution to a uniform irradiance distribution at an illumination plane.

Document US2018/203338 A1 discloses an illumination device configured to include a light source and a light condensing body which condenses light from the light source to be emitted, and the light condensing body includes an incidence surface of a light source side, an emission surface emitting light, and a side surface which is present between the incidence surface and the emission surface, the side surface is a curved surface of which a distance from a light axis in a direction orthogonal to the light emitting surface of the light source at the center of the light source becomes large from the incidence surface toward the emission surface and has a plurality of curved-surface-shapes of which shapes of the curved surfaces are different from each other.

Document WO2016/165315 A1 discloses an optical lens comprises: a lens body, having a central optical axis; a transmissive curved surface, disposed on the lens body and along one end of the central optical axis; an annular reflecting surface, disposed on a side of the lens body and around the central optical axis; a refractive curved surface, disposed on a side of the lens body and around the central optical axis; a reflecting surface, disposed on the lens body and along the other end of the central optical axis.

Document WO2015/025028 A1 discloses an optical system for producing uniform illumination on a target.

Document KR 2020 0000567 U discloses a LED search light lens and LED search light using the same.

Document SHEN MO ET AL: "P-154: Reflective Fly Eye Condenser Design for LED Illuminating Projetcion System", 2005 SID INTERNATIONAL SYMPOSIUM. BOSTON, MA, MAY 24-27, 2005; [SID INTERNATIONAL SYMPOSIUM], SAN JOSE, CA: SID, US, vol. XXXVI, 24 May 2005 (2005-05-24), pages 888-891, XP007012577, discloses a reflective fly-eye condenser with a high brightness LED as light source for micro-display projector.

### Disclosure of the Invention

The object of the invention is to overcome these drawbacks. This purpose is achieved by means of an optical system of the type indicated above (i.e., with an entry surface for the entry of a light beam originating from a light source and an exit surface for the exit of the light beam, the optical system defining an optical axis extending from the entry surface to the exit surface), characterized in that it has
[a] a first region with a material with a first refractive index, a second region with a material with a second refractive index, a third region with a material with a third refractive index, a fourth region with a material with a fourth refractive index, and a fifth region with a material with a fifth refractive index, arranged sequentially according to the optical axis between the entry surface and the exit surface and being coaxial with the optical axis,
[b] a sixth perimetral region with a material with a sixth refractive index, extending axially between the first region and the third region and laterally surrounding the second region,
[c] a first separating surface arranged between the first region and the second region, a second separating surface arranged between the second region and the third region, a third separating surface arranged between the third region and the fourth region, a fourth separating surface arranged between the fourth region and the fifth region, a fifth separating surface arranged between the second region and the sixth region, and an outer side surface which is facing the fifth separating surface and surrounding the perimeter of the sixth perimetral region on the outer side thereof,
[d] wherein the second refractive index is less than the first, third, and sixth refractive indices, and the fourth refractive index is less than the third and fifth refractive indices,
[e] wherein the light beam is suitable for propagating through the first region such that a central portion of the light beam goes through the first separating surface and penetrates the second region and a perimetral portion of the light beam penetrates the sixth perimetral region, wherein the first separating surface is concave when viewed from the entry surface,
[f] wherein the central portion of the light beam is suitable for propagating along the second region, the third region, the fourth region, and the fifth region, going through central parts of the second, third, and fourth separating surfaces and a central part of the exit surface, wherein the central part of the second separating surface is convex when viewed from the entry surface, the central part of the third separating surface is convex when viewed from the entry surface, the central part of the fourth separating surface is concave when viewed from the entry surface, and the central part of the exit surface is convex when viewed from the entry surface,
[g] wherein the perimetral portion of the light beam is suitable for propagating along the sixth region, the third region, the fourth region, and the fifth region, going through annular perimetral parts of the third and fourth separating surfaces and an annular perimetral part of the exit surface, wherein more than 50% of the perimetral portion of the light beam, and preferably more than 75%, is reflected on the outer side surface and, once reflected, propagates along the third region and goes through the annular perimetral part of the third separating surface.

The present invention proposes a new projection system which allows replacing "fly-eye" optical components with the optical system according to the invention. One of the main advantages this entails is that the new optical system allows reducing the dimensions and working distances, such that the volume of the projector can be reduced between 50% and 70% depending on the projection depth sought, thereby making the projector more compact. In this sense, for example, the new optical system can replace the optical components called "fly-eye", which require very long working distances, causing projectors to have very large dimensions.

In general, in the optical system according to the invention, the incoming light beam follows two very different optical paths depending on whether it is the central portion or the perimetral portion. There may also be a fraction of light which is not reflected at all on the outer side wall when entering the sixth region. This fraction of light is lost in practice because it is not possible to control the optical path that it follows. To that end, the optical system (entry diameter of the second region, angles of the walls of the optical system, etc.) is designed such that this fraction of light is minimal.

The optical system according to the invention preferably has one or more of the following geometric alternatives:
- the central part of the third separating surface is a spherical surface and the annular perimetral part of the third separating surface is a concave surface when viewed from the entry surface. In this case, it is particularly advantageous for any longitudinal section of the annular perimetral part of the third separating surface according to a plane containing the optical axis to be a circular arc the center of which is outside the optical axis.
- the central part of the fourth separating surface and the annular perimetral part of the fourth separating surface form a spherical surface.
- the central part of the exit surface is a spherical surface and the annular perimetral part of the exit surface is conical coaxial with the optical axis and opening towards the exit surface.
- the fifth separating surface is a conical surface coaxial with the optical axis and opening towards the exit surface, and preferably has an angle of aperture comprised between 51° and 56°, and very preferably an angle of aperture comprised between 53° and 54°. Advantageously, the origin of this conical surface is in the optical center of the optical system.
- the outer side surface is a concave surface when viewed from the inside of the second region.
- the optical system exhibits symmetry of revolution with respect to the optical axis. The optical system is three-dimensional and may, though does not necessarily, exhibit symmetry of revolution with respect to the optical axis (and it does indeed exhibit symmetry of revolution in a preferred embodiment). In fact, in some cases, the light source may not exhibit symmetry of revolution, but may be square for example. In this case, it may be advantageous for the optical system not to exhibit symmetry of revolution either, rather the geometry thereof is adapted to the geometry of the light source. In the present description and claims, the optical system has been described as if it exhibited symmetry of revolution. However, it can be perfectly generalized to the case of optical systems without symmetry of revolution. In the case of optical systems without symmetry of revolution, all that is described and claimed is valid for any longitudinal section of the optical system along a plane containing the light source emission axis.

The optical system according to the invention preferably comprises one or more of the following materials:
- the material of the second region is a gas or a mixture of gases, and, preferably, the material of the second region is air.
- the material of the fourth region is a gas or a mixture of gases, and, preferably, the material of the fourth region is air. In fact, both in the case in which the material of the second region or the fourth region (or preferably of both regions simultaneously) is a gas (or a mixture of gases), and particularly in the case in which said material is air, it allows using a material (gas or air) with a refractive index that is considerably different from other materials of the system, and this is particularly advantageous from an optical viewpoint. Moreover, the geometry of the optical system allows including these "air lenses" in a simple and compact manner, as will be seen below.
- the material of the first region and the material of the third region are the same material, and the material is preferably polycarbonate (PC) or polymethylmethacrylate (PMMA), and very preferably polycarbonate.
- the material of the first region and the material of the sixth region are the same material, and the material is preferably polycarbonate or polymethylmethacrylate, and very preferably polycarbonate.
- the material of the fifth region is polycarbonate or polymethylmethacrylate, and very preferably polymethylmethacrylate.
- in any of the preceding cases, the polycarbonate preferably has a refractive index comprised between 1.58 and 1.59 and/or the polymethylmethacrylate preferably has a refractive index comprised between 1.485 and 1.495.

The optical system according to the invention preferably comprises one or more of the following geometric alternatives:
- the first region and the sixth region are a single physical piece.
- when the material of the second region is a gas or a mixture of gases (particularly air) and when the material of the first region and the material of the sixth region are the same material (particularly forming a single physical piece), it is particularly advantageous for the third region to be a physical piece independent of the first region and sixth region and the front and rear walls thereof form the second and third separating surfaces, respectively, and, in a set-up position, an annular perimetral part of the second separating surface is supported on the sixth region allowing the passage of the perimetral portion of the light beam from the sixth region to the third region, and, in the set-up position, there is a hollow cavity defining the second region between the first separating surface and the second separating surface.
- when the material of the fourth region is a gas or a mixture of gases (particularly air), it is advantageous for the fifth region to be a physical piece independent of the third region and the front and rear walls thereof form the fourth separating surface and the exit surface, respectively, and, in a set-up position, the fifth region is supported on the third region and, in the set-up position, there is a hollow cavity defining the fourth region between the third separating surface and the fourth separating surface.

If the optical system comprises the three preceding geometric alternatives, it is particularly advantageous for the optical system to comprise a cylindrical sleeve housing therein the three physical pieces (the physical piece forming the first region and the sixth region, the physical piece forming the third region, and the physical piece forming the fifth region), wherein there is a space defining a seventh region between an inner side wall of the sleeve and the outer side surface, wherein the seventh region will be filled with a material with a seventh refractive index that is less than the sixth refractive index, wherein the material of the seventh region is preferably a gas or polymethylmethacrylate. In fact, the presence of the cylindrical sleeve allows two major advantages:
- on one hand, the sleeve is an element which facilitates the setting up of the three physical pieces indicated above.
- on the other hand, the sleeve allows the creation of the seventh region and the inclusion therein of a material with a refractive index less than the sixth refractive index. In fact, the sixth region mainly performs a light guiding function. To that end, the light beams striking the outer side surface must be reflected. Although it would be possible to coat the outer side surface with a reflective material, obtaining this reflection as total internal reflection (TIR) is far better, for which there is a need to have a material with a refractive index less than that of the material of the sixth region externally with respect to the outer side surface. Since the seventh region is defined as a result of the sleeve, it is particularly easy to fill said region with the appropriate material.

It is particularly interesting for the material of the sixth region to be polycarbonate and to fill the seventh region with polymethylmethacrylate. Therefore, in addition to the advantages mentioned up until now, the polymethylmethacrylate of the seventh region also performs the function of encapsulating the assembly of the optical system.

### Brief Description of the Drawings

Other advantages and features of the invention will become apparent from the following description in which preferred embodiments of the invention are described in a non-limiting manner in reference to the attached drawings. In the figures:
Figure 1 shows a longitudinal section, according to the optical axis, of an optical system according to the invention.
Figure 2 shows a side elevational view of the optical system of Figure 1.
Figure 3 shows a diagram of the optically relevant parts of the optical system of Figure 1.
Figures 4A, 4B, and 4C show a rear perspective view, a front perspective view, and a longitudinal section, respectively, of the physical piece comprising the first region and the sixth region in the optical system of Figure 1.
Figures 5A, 5B, and 5C show a rear perspective view, a front perspective view, and a longitudinal section, respectively, of the physical piece comprising the third region in the optical system of Figure 1.
Figures 6A, 6B, and 6C show a rear perspective view, a front perspective view, and a longitudinal section, respectively, of the second region in the optical system of Figure 1.
Figures 7A, 7B, and 7C show a rear perspective view, a front perspective view, and a longitudinal section, respectively, of the physical piece comprising the fifth region in the optical system of Figure 1.
Figures 8A, 8B, and 8C show a rear perspective view, a front perspective view, and a longitudinal section, respectively, of the fourth region in the optical system of Figure 1.
Figure 9 shows a diagram of the trajectories followed by light rays emitted by the light source in the optical system of Figure 1.
Figure 10 shows a diagram similar to that of Figure 9, without depicting the optical system, showing the central portion of the light beam.
Figure 11 shows a diagram similar to that of Figure 9, without depicting the optical system, showing the perimetral portion of the light beam.
Figures 12A and 12B show a diagram similar to that of Figure 9 together with an enlargement of the lower part thereof.
Figures 13A and 13B show a simulation of the illumination distribution of the optical system of Figure 1 with the sensor at a distance of 1 meter. (A) illumination distribution on the X-axis of the plane of the sensor, and (B) illumination distribution on the Y-axis of the plane of the sensor.
Figures 14A and 14B show the simulation of Figures 13A and 13B, but with the sensor at a distance of 30 cm.
Figures 15A and 15B show the simulation of Figures 13A and 13B, but with the sensor at a distance of 20 cm.
Figures 16A and 16B show the simulation of Figures 13A and 13B, but with the sensor at a distance of 10 cm.
Figures 17A and 17B show the simulation of Figures 13A and 13B, but with the sensor at a distance of 6 cm.
Figures 18A and 18B show the simulation of Figures 13A and 13B, but with the sensor at a distance of 3 cm.

### Detailed Description of Embodiments of the Invention

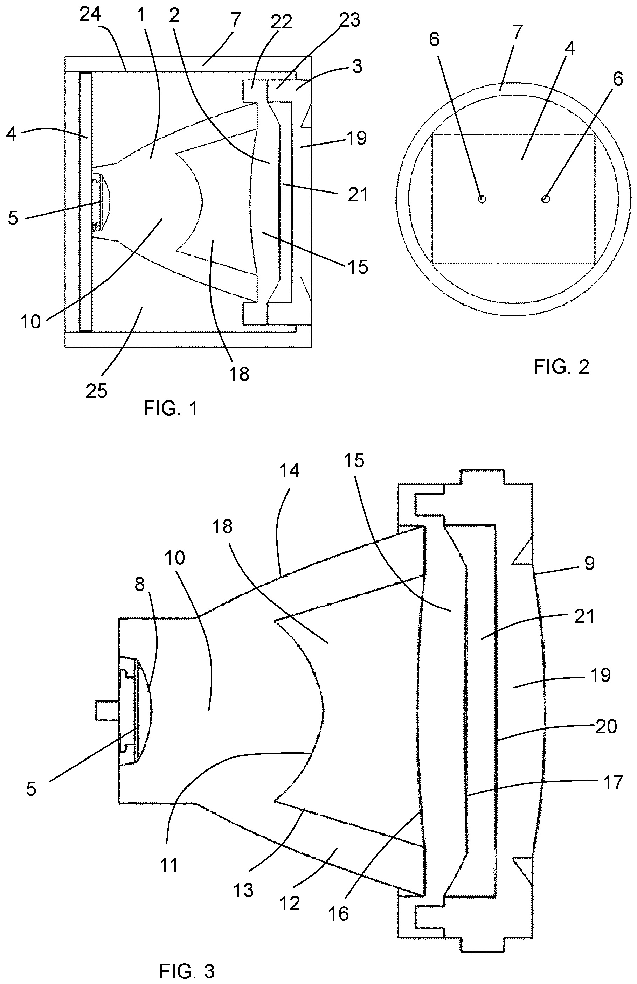

Figure 1 shows an optical system according to the invention. The optical system comprises three pieces 1, 2, and 3, referred to hereinafter as the first piece 1, the second piece 2, and the third piece 3. The first piece 1 is supported on an electronic board 4 (a PCB - printed circuit board) and covers a light source 5 (in this example, a LED). The first piece 1 is fixed to the electronic board 4 by means of two openings 6 present in the electronic board 4 (see Figure 2). The second piece 2 is supported on the first piece 1 along an annular perimetral part. In turn, the third piece 3 is supported on the second piece 2 along an annular perimetral part. The three pieces 1, 2, and 3 are surrounded by a sleeve 7.

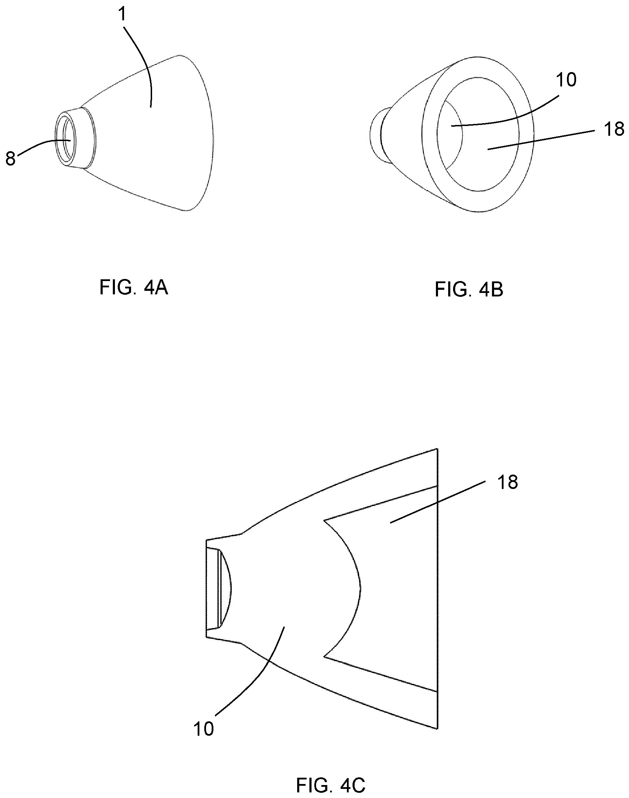

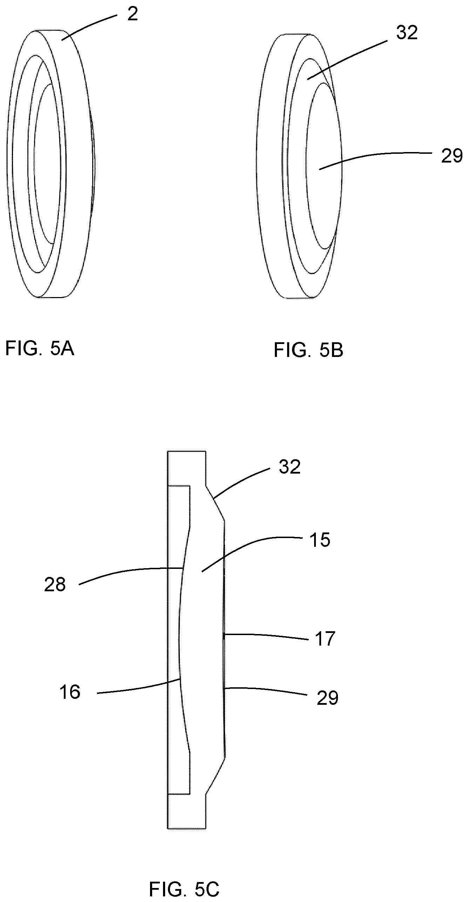

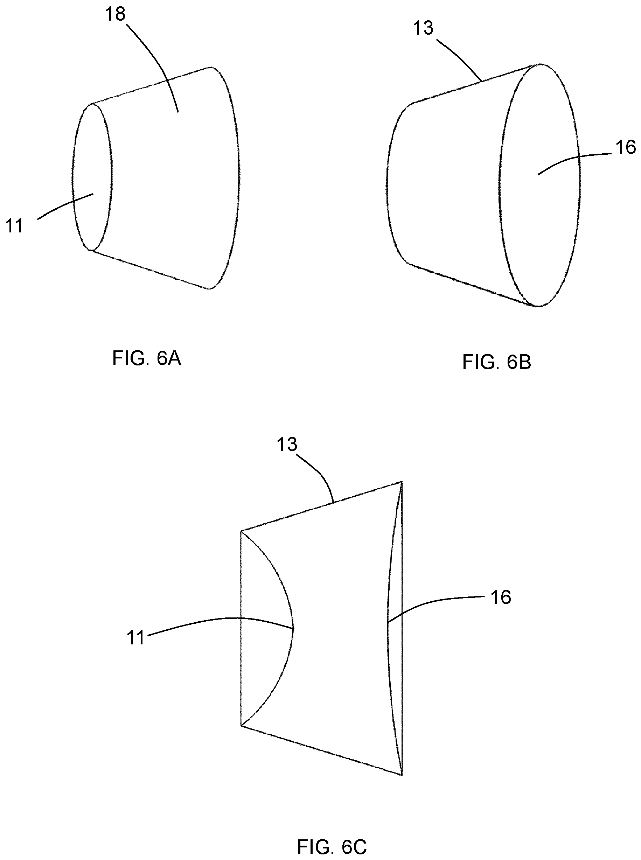

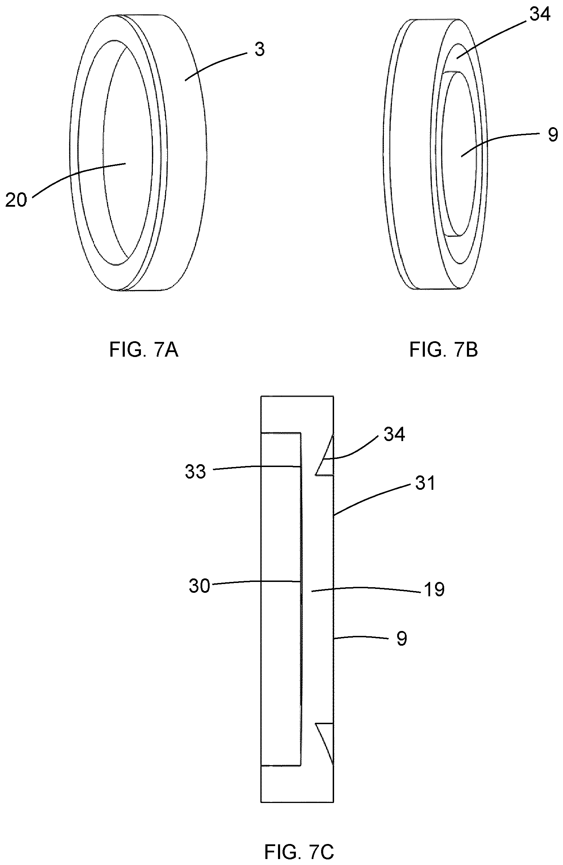

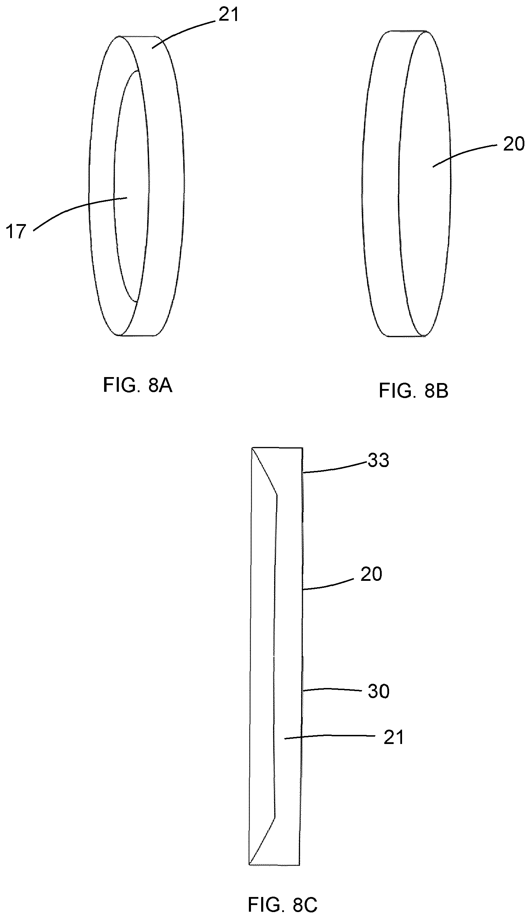

As can be seen (see Figures 3 to 8C), this optical system defines:
- an entry surface 8 for the entry of a light beam originating from the light source 5 and an exit surface 9 for the exit of the light beam. The optical system defines an optical axis extending from the entry surface 8 to the exit surface 9.
- the first piece 1 defines a first region 10, in the part thereof closest to the light source 5, extending from the entry surface 8 and ending in a first separating surface 11. Furthermore, the first piece 1 defines a sixth region 12, extending annularly according to the optical axis, projecting towards the exit surface 9. This sixth region 12 is limited by a fifth separating surface 13 (closer to the optical axis) and an outer side surface 14 (farther from the optical axis and facing the fifth separating surface 13). The second piece 2 defines a third region 15, comprised between a second separating surface 16 and a third separating surface 17, and the first piece 1 and the third piece 3 together define a second region 18 arranged between the first separating surface 11, the second separating surface 16, and the fifth separating surface 13.
- the third piece 3 defines a fifth region 19 comprised between a fourth separating surface 20 and the exit surface 9, and the second piece 2 and the third piece 3 together define a fourth region 21 arranged between the third separating surface 17 and the fourth separating surface 20.
- the second piece 2 and the third piece 3 have annular end steps 22 and 23, respectively, which are used for setting up the assembly but do not perform an optical function.
- the sleeve 7 houses therein the three pieces 1, 2, and 3 and defines a seventh region 25 between its inner side wall 24 and the outer side surface 14.

The first piece 1, i.e., the first region 10 and the sixth region 12, and the second piece 2, i.e., the third region 15, are made of polycarbonate with a refractive index of 1.5848. The second region 18 and the fourth region 21 are filled with air. The third piece 3 is made of polymethylmethacrylate with a refractive index of 1.4906. The seventh region 25 is filled with the same polymethylmethacrylate. The polymethylmethacrylate which fills the seventh region 25 performs an optical function and is additionally used for physically attaching the three pieces 1, 2, and 3 to one another and to the sleeve 7 and the electronic board 4, forming a hermetic and compact assembly.

The origin of coordinates is established on the emission surface of the light source 5 (a LED). The Z-axis is the optical axis and positive direction is the light propagation direction. The Y-axis is perpendicular to the Z-axis and the YZ plane is the plane of the paper on which the figures are printed.

The three pieces 1, 2, and 3 are obtained based on the revolution of certain sections about the Z-axis according to the YZ plane. Each of the sections of each piece 1, 2, and 3 is made up of a plurality of segments. Some of these segments correspond with simple geometries of revolution, such as spheres or cones the axis of which is the Z-axis. In other cases, the segments can be, for example, circular arcs the center of which is not on the Z-axis. Specifically, the three pieces 1, 2, and 3 of the present example are formed as follows:
First piece 1:
   The entry surface 8 is a spherical, concave (towards the origin) surface of revolution with a radius of 7.55 mm and with the center at (y, z) = (0, -6.34) mm.
   The first separating surface 11 is a spherical, concave (towards the origin) surface of revolution with a radius of 8.78 mm and with the center at (y, z) = (0, 4.50) mm.
   The fifth separating surface 13 is generated from the rotation about the Z-axis of a straight line with an inclination of 17.13° on the Z-axis and intersects the first separating surface 11 at (y, z) = (6.35, 9.81) mm.
   The outer side surface 14 is generated from the rotation about the Z-axis of a circular arc with a radius of 75.98 mm, with the center located at (y, z) = (-60.08, 40.92) mm. The arc starts at (y, z) = (6.78, 4.82) mm and ends at (y, z) = (13.07, 20.38) mm.
Second piece 2:
   The second separating surface 16 is a spherical, convex (towards the origin) surface of revolution with a radius of 90 mm and with the center at (y, z) = (0, 109.85) mm.
   The third separating surface 17 is a spherical, convex (towards the origin) surface of revolution with a radius of 381.78 mm and with the center at (y, z) = (0, 404.93) mm.
   The third separating surface 17 has an annular perimetral part 32. This annular perimetral part 32 is obtained by rotating about the Z-axis a circular arc with a radius of 29.70 mm and with the center at (y, z) = (-2.41, -3.66) mm.
Third piece 3:
   The fourth separating surface 20 is a spherical, concave (towards the origin) surface of revolution with a radius of 857.48 mm and with the center at (y, z) = (0, -832.06) mm.

The exit surface 9 is a spherical, concave (towards the origin) surface of revolution with a radius of 60 mm and with the center at (y, z) = (0, -31.21) mm.

The exit surface 9 has another annular perimetral part 34. This annular perimetral part 34 is formed by two surfaces. The first of said surfaces is a circular cylindrical surface coaxial with the Z-axis and with a radius of 10.36 mm. The second surface is a conical surface of revolution with an inclination of 53.66° on the Z-axis and intersects the circular cylindrical surface at (y, z) = (10.36, 26.47) mm.

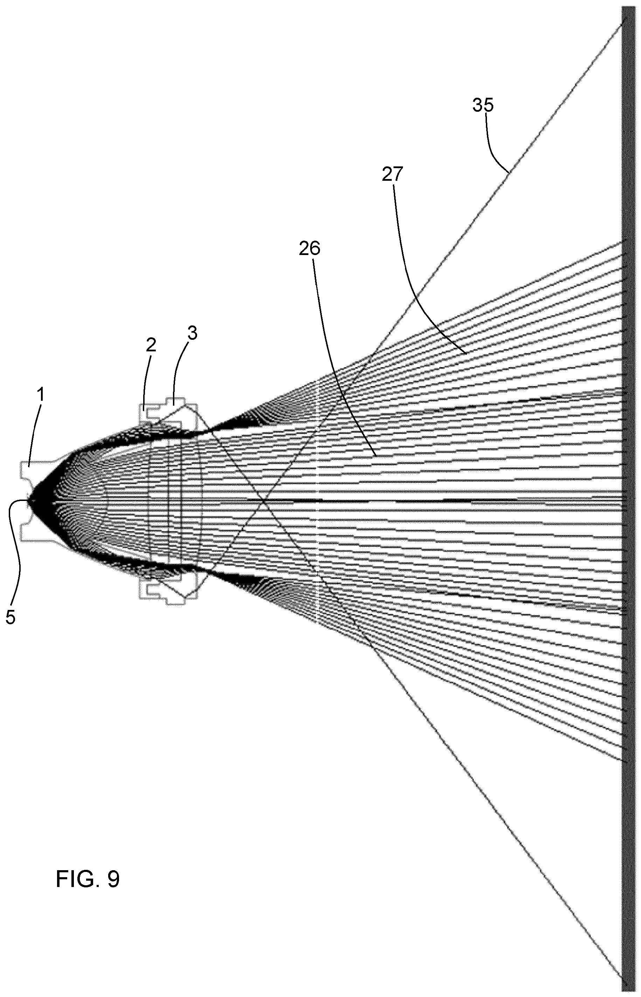

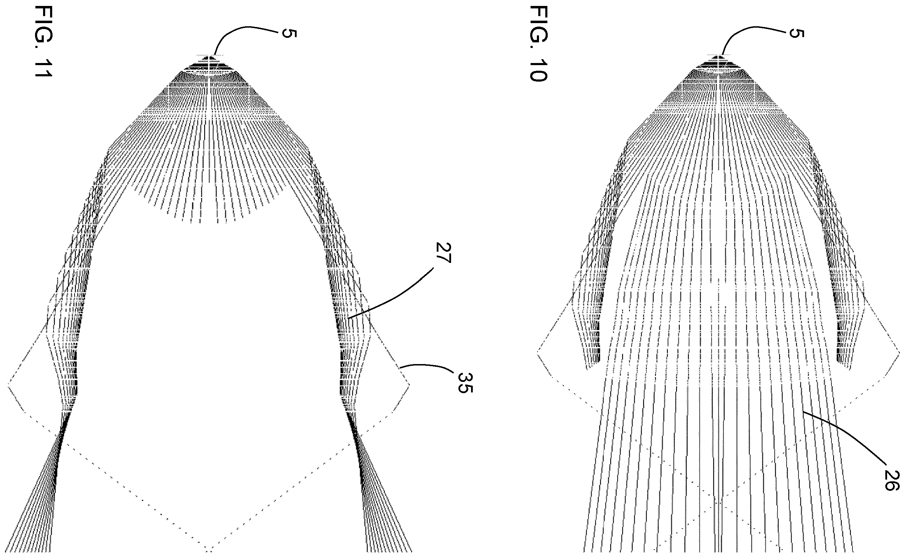

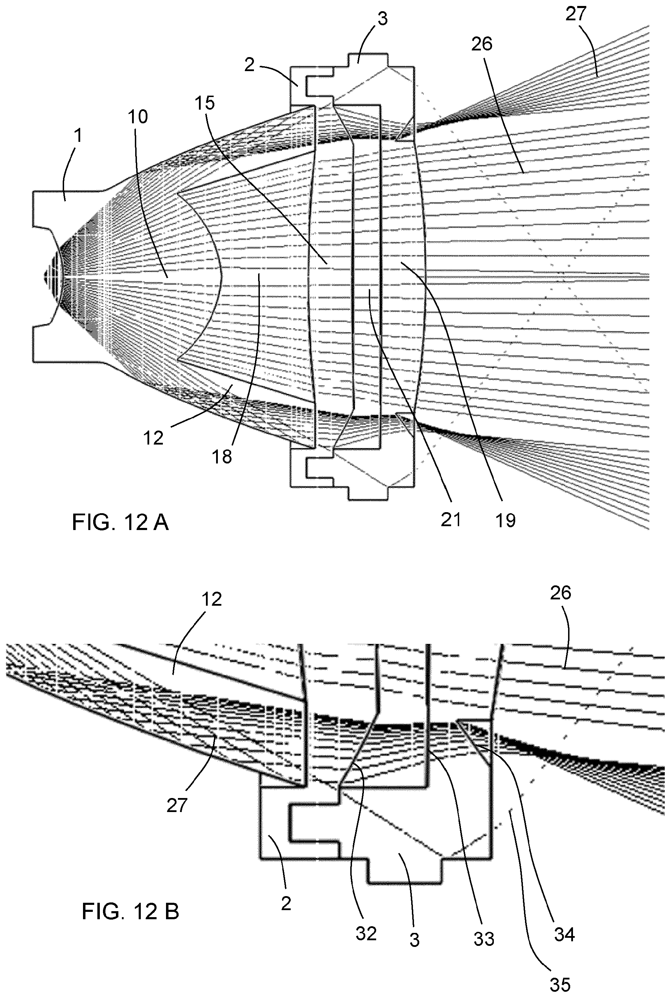

Figures 9 to 12B show the optical behavior of the optical system:
- The light beam generated by the light source 5 enters the first region 10 through the entry surface 8. A part of this light beam reaches the first separating surface 11 and enters the second region 18, which is filled with air and therefore forms an air lens. This part of the light beam is the one referred to as the central portion 26 of the light beam. The central portion 26 of the light beam is surrounded by of another part of the light beam the rays of which present trajectories forming a larger angle with the optical axis than the rays of the central portion 26 of the light beam. This another part of the light beam does not enter the second region 18 but rather propagates through the sixth region 12, and it is the one referred to as the perimetral portion 27 of the light beam.
- the central portion 26 of the light beam runs along the second region 18 and exits said region through the second separating surface 16, entering the third region 15 (which is in the second piece 2). The central portion 26 of the light beam exits the third region 15 through the third separating surface 17 and enters the fourth region 21, which is also filled with air and forms a second air lens. The central portion 26 of the light beam goes from the fourth region 21 to the fifth region 19 through the fourth separating surface 20 and exits the fifth region 19 through the exit surface 9. The central portion 26 of the light beam actually goes through the central parts of the regions and the separating surfaces indicated, given that, as will be seen below, the perimetral portion 27 of the light beam also goes through several of these regions but through annular perimetral parts thereof. Specifically, the second separating surface 16 has a central part 28, the third separating surface 17 has a central part 29, the fourth separating surface 20 has a central part 30, and the exit surface 9 has a central part 31.
- in turn, the perimetral portion 27 of the light beam enters the sixth region 12 and is reflected, for the most part (more than 50%, preferably more than 75%, and very preferably more than 90%), on the outer side surface 14. The reflected light is directed to the third region 15 and it goes through said region in an annular perimetral part thereof. It then propagates through the fourth region 21 and the fifth region 19 and exits to the outside, always going through annular perimetral parts of these regions. The annular perimetral parts of these regions are defined by annular perimetral parts of the respective separating surfaces. Specifically, the third separating surface 17 has one annular perimetral part 32, the fourth separating surface 20 has another annular perimetral part 33, and the exit surface 9 has another annular perimetral part 34. The central portion 26 of the light beam goes through the central parts of the regions and separating surfaces indicated in the preceding paragraph. Those rays 35 which are not reflected on the outer side surface 14 do not follow a "controlled" trajectory. However, a suitable design of the geometries of pieces 1, 2, and 3 allows the amount of these rays to be reduced to a negligible minimum, and even to 0.

It is worth mentioning that the second separating surface 16 does not actually have an annular perimetral part that is optically active. In fact, the first piece 1 and the second piece 2 are made of one and the same material (they have the same refractive index), so the contact surface between both pieces has no influence whatsoever from the optical viewpoint. In turn, in the present example, the central part 30 and the annular perimetral part 33 of the fourth separating surface 20 physically form one and the same spherical surface. Therefore, even though there is, conceptually, a central part with the central portion 26 of the light beam going through it and an annular perimetral part with the perimetral portion 27 of the light beam going through it, they are both defined geometrically as a single surface.

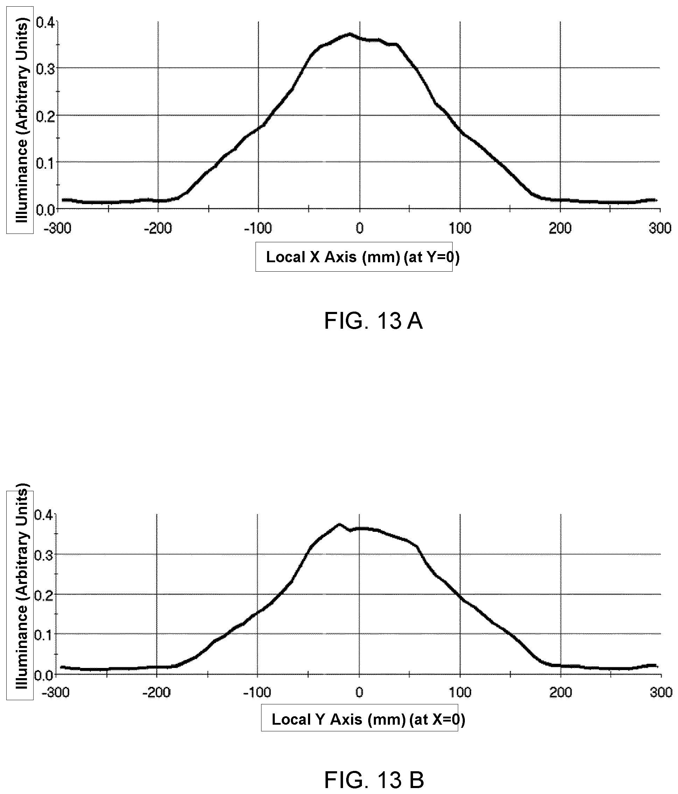

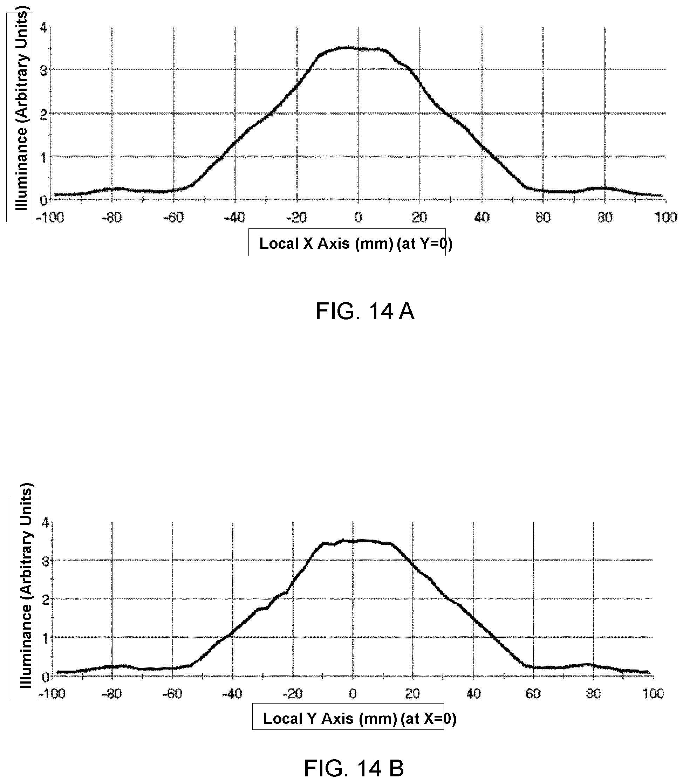

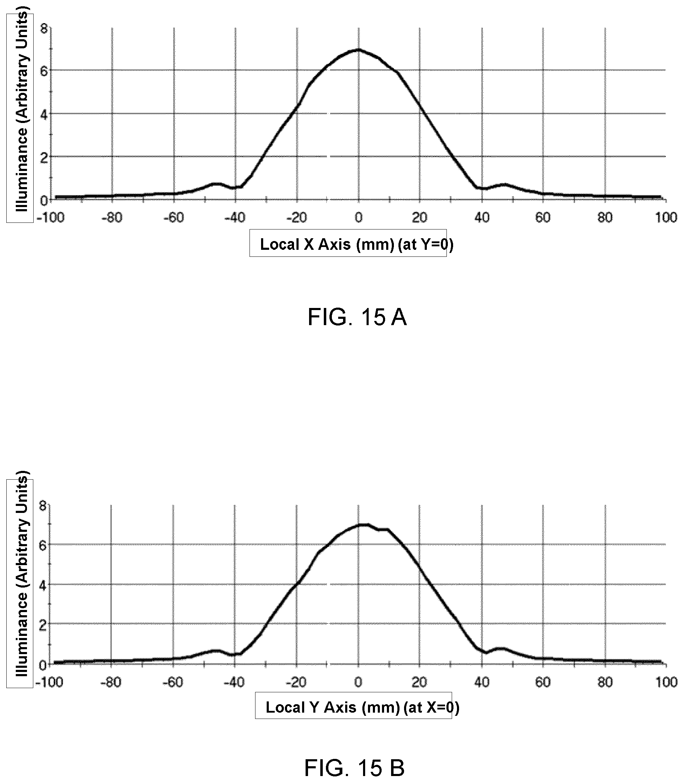

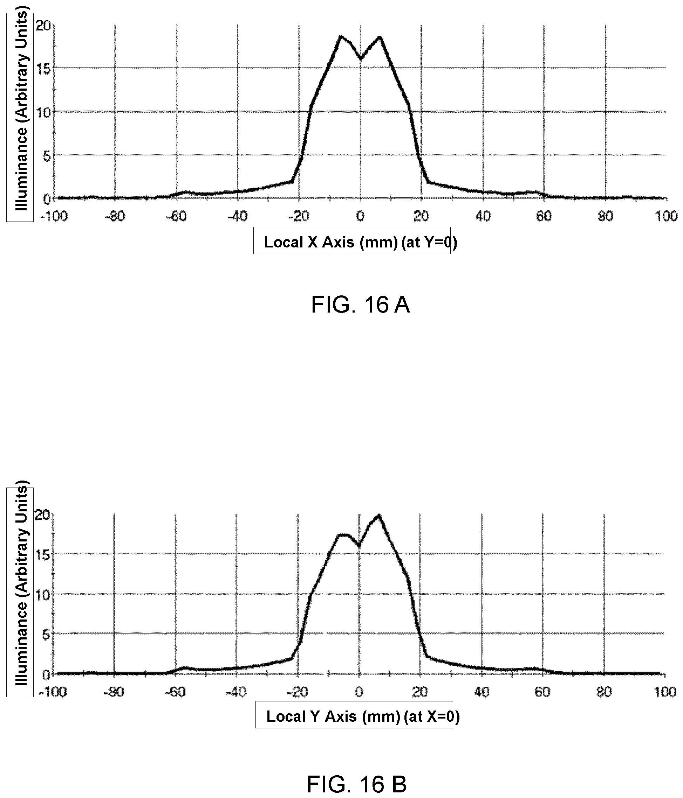

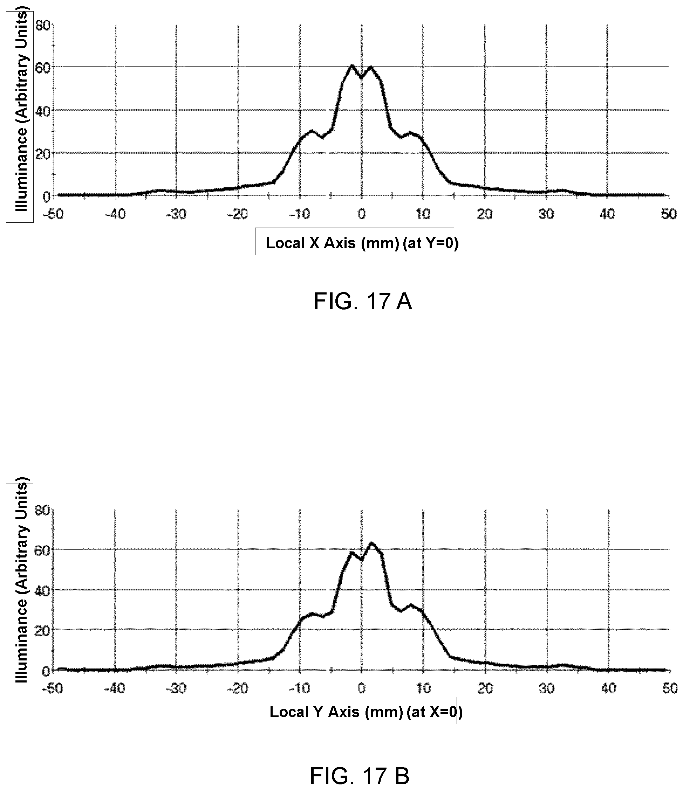

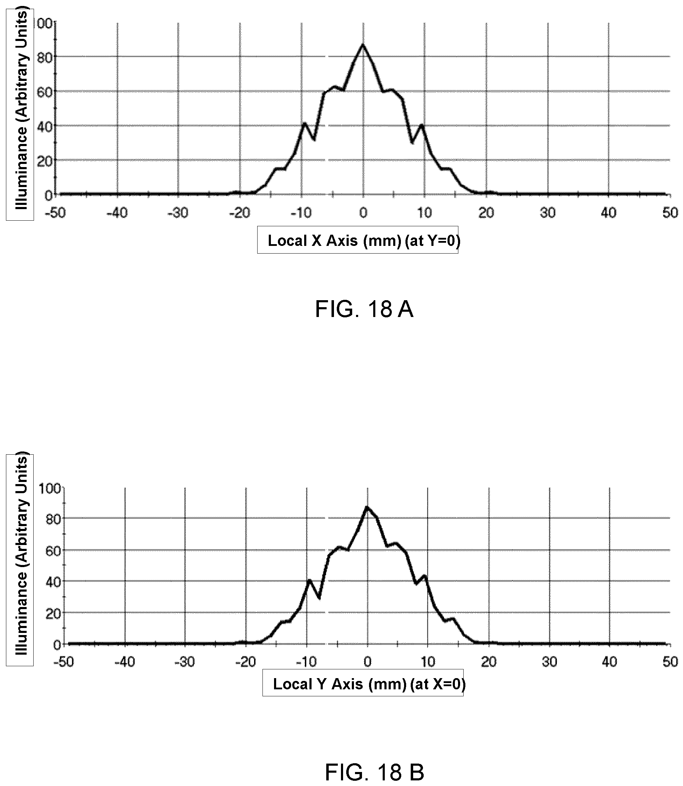

Various simulations have been performed by means of simulation software to evaluate the operation of this optical system. The sensor of the simulator has been placed at different distances from the optical system to validate the illumination uniformity of this assembly. The simulations have been performed at 1 meter, 30 cm, 20 cm, 10 cm, 6 cm, and 3 cm. The results are shown in Figures 13A to 18B.

## Claims

1. An optical system with an entry surface (8) for the entry of a light beam originating from a light source (5) and an exit surface (9) for the exit of said light beam, said optical system defining an optical axis extending from said entry surface (8) to said exit surface (9), said optical system having:
[a] a first region (10) with a material with a first refractive index, **characterized in that** said optical system has a second region (18) with a material with a second refractive index, a third region (15) with a material with a third refractive index, a fourth region (21) with a material with a fourth refractive index, and a fifth region (19) with a material with a fifth refractive index, arranged sequentially according to said optical axis between said entry surface (8) and said exit surface (9) and being coaxial with said optical axis,
[b] a sixth perimetral region (12) with a material with a sixth refractive index, extending axially between said first region (10) and said third region (15) and laterally surrounding said second region (18),
[c] a first separating surface (11) arranged between said first region (10) and said second region (18), a second separating surface (16) arranged between said second region (18) and said third region (15), a third separating surface (17) arranged between said third region (15) and said fourth region (21), a fourth separating surface (20) arranged between said fourth region (21), and said fifth region (19), a fifth separating surface (13) arranged between said second region (18) and said sixth region (12), and an outer side surface (14), which is facing said fifth separating surface (13) and surrounding the perimeter of said sixth perimetral region (12) on the outer side thereof,
[d] wherein said second refractive index is less than said first, third, and sixth refractive indices, and said fourth refractive index is less than said third and fifth refractive indices,
[e] wherein said light beam is suitable for propagating through said first region (10) such that a central portion (26) of said light beam goes through said first separating surface (11) and penetrates said second region (18) and a perimetral portion (27) of said light beam penetrates said sixth perimetral region (12), wherein said first separating surface (11) is concave when viewed from said entry surface (8),
[f] wherein said central portion (26) of said light beam is suitable for propagating along said second region (18), said third region (15), said fourth region (21), and said fifth region (19), going through central parts of said second, third, and fourth separating surfaces and a central part of said exit surface (9), wherein said central part of said second separating surface (16) is convex when viewed from said entry surface (8), said central part of said third separating surface (17) is convex when viewed from said entry surface (8), said central part of said fourth separating surface (20) is concave when viewed from said entry surface (8), and said central part of said exit surface (9) is convex when viewed from said entry surface (8), and
[g] wherein said perimetral portion (27) of said light beam is suitable for propagating along said sixth region (12), said third region (15), said fourth region (21), and said fifth region (19), going through annular perimetral parts of said third and fourth separating surfaces and an annular perimetral part of said exit surface (9), wherein more than 50% of said perimetral portion (27) of said light beam, and preferably more than 75%, is reflected on said outer side surface (14) and, once reflected, propagates along said third region (15) and goes through said annular perimetral part of said third separating surface (17).

2. The optical system according to claim 1, **characterized in that** said central part of said third separating surface (17) is a spherical surface and said annular perimetral part of said third separating surface (17) is a concave surface when viewed from said entry surface (8).

3. The optical system according to claim 2, **characterized in that** any longitudinal section of said annular perimetral part of said third separating surface (17) according to a plane containing said optical axis is a circular arc the center of which is outside said optical axis.

4. The optical system according to any one of claims 1 to 3, **characterized in that** said central part of said fourth separating surface (20) and said annular perimetral part of said fourth separating surface (20) form a spherical surface.

5. The optical system according to any one of claims 1 to 4, **characterized in that** said central part of said exit surface (9) is a spherical surface and said annular perimetral part of said exit surface (9) is conical coaxial with said optical axis and opening towards said exit surface (9).

6. The optical system according to any one of claims 1 to 5, **characterized in that** said fifth separating surface (13) is a conical surface coaxial with said optical axis and opening towards said exit surface (9), and preferably has an angle of aperture comprised between 51° and 56° and, very preferably an angle of aperture comprised between 53° and 54°.

7. The optical system according to any one of claims 1 to 6, **characterized in that** said outer side surface (14) is a concave surface when viewed from the inside of said second region (18).

8. The optical system according to any one of claims 1 to 7, **characterized in that** it exhibits symmetry of revolution with respect to said optical axis.

9. The optical system according to any one of claims 1 to 8, **characterized in that** said material of said second region (18) is a gas or a mixture of gases, and, preferably, said material of said second region (18) is air.

10. The optical system according to any one of claims 1 to 9, **characterized in that** said material of said fourth region (21) is a gas or a mixture of gases, and, preferably, said material of said fourth region (21) is air.

11. The optical system according to any one of claims 1 to 10, **characterized in that** said material of said first region (10) and said sixth region (12) are the same material, and, preferably, said material is polycarbonate or polymethylmethacrylate, and very preferably is polycarbonate.

12. The optical system according to claim 11, **characterized in that** said first region (10) and said sixth region (12) are a single physical piece (1).

13. The optical system according to claims 9 and 11 or according to claims 9 and 12, **characterized in that** said third region (15) is a physical piece (2) independent of said first region (10) and sixth region (12) and the front and rear walls thereof form said second and third separating surfaces, respectively, and, in a set-up position, an annular perimetral part of said second separating surface (16) is supported on said sixth region (12) allowing the passage of said perimetral portion (27) of said light beam from said sixth region (12) to said third region (15) and, in said set-up position, there is a hollow cavity defining said second region (18) between said first separating surface (11) and said second separating surface (16).

14. The optical system according to claim 10 or claim 13 when it depends on claim 10, **characterized in that** said fifth region (19) is a physical piece (3) independent of said third region (15) and the front and rear walls thereof form said fourth separating surface (20) and said exit surface (9), respectively, and, in a set-up position, said fifth region (19) is supported on said third region (15) and, in said set-up position, there is a hollow cavity defining said fourth region (21) between said third separating surface (17) and said fourth separating surface (20).

15. The optical system according to claims 12, 13, and 14, **characterized in that** it comprises a cylindrical sleeve (7) housing therein said three physical pieces (1, 2, 3), the physical piece forming said first region (10) and said sixth region (12), the physical piece forming said third region (15), and the physical piece forming said fifth region (19), wherein between an inner side wall of said sleeve (7) and said outer side surface (14) there is a space defining a seventh region (25), wherein said seventh region (25) is filled with a material with a seventh refractive index that is less than said sixth refractive index, wherein said material of said seventh region (25) is preferably a gas or polymethylmethacrylate.

## Patentansprüche

1. Optisches System mit einer Eintrittsfläche (8) für den Eintritt eines Lichtstrahls, der aus einer Lichtquelle (5) stammt, und einer Austrittsfläche (9) für den Austritt des Lichtstrahls, wobei das optische System eine optische Achse definiert, die sich von der Eintrittsfläche (8) zur Austrittsfläche (9) erstreckt, wobei das optische System aufweist:
[a] einen ersten Bereich (10) mit einem Material mit einem ersten Brechungsindex, **gekennzeichnet dadurch, dass** das optische System einen zweiten Bereich (18) mit einem Material mit einem zweiten Brechungsindex, einen dritten Bereich (15) mit einem Material mit einem dritten Brechungsindex, einen vierten Bereich (21) mit einem Material mit einem vierten Brechungsindex und einen fünften Bereich (19) mit einem Material mit einem fünften Brechungsindex aufweist, die sequenziell entsprechend der optischen Achse zwischen der Eintrittsfläche (8) und der Austrittsfläche (9) angeordnet und koaxial mit der optischen Achse sind,
[b] einen sechsten perimetralen Bereich (12) mit einem Material mit einem sechsten Brechungsindex, der sich axial zwischen dem ersten Bereich (10) und dem dritten Bereich (15) erstreckt und den zweiten Bereich (18) lateral umgibt,
[c] eine erste Trennfläche (11), die zwischen dem ersten Bereich (10) und dem zweiten Bereich (18) angeordnet ist, eine zweite Trennfläche (16), die zwischen dem zweiten Bereich (18) und dem dritten Bereich (15) angeordnet ist, eine dritte Trennfläche (17), die zwischen dem dritten Bereich (15) und dem vierten Bereich (21) angeordnet ist, eine vierte Trennfläche (20), die zwischen dem vierten Bereich (21) und dem fünften Bereich (19) angeordnet ist, eine fünfte Trennfläche (13), die zwischen dem zweiten Bereich (18) und dem sechsten Bereich (12) angeordnet ist, und eine äußere Seitenfläche (14), die der fünften Trennfläche (13) zugewandt ist und den Umfang des sechsten perimetralen Bereichs (12) auf dessen äußerer Seite umgibt,
[d] wobei der zweite Brechungsindex niedriger ist als der erste, dritte und sechste Brechungsindex, und der vierte Brechungsindex niedriger ist als der dritte und fünfte Brechungsindex,
[e] wobei der Lichtstrahl dazu geeignet ist, sich durch den ersten Bereich (10) fortzubewegen, so dass ein zentraler Abschnitt (26) des Lichtstrahls durch die erste Trennfläche (11) geht und in den zweiten Bereich (18) eindringt und ein perimetraler Abschnitt (27) des Lichtstrahls in den sechsten perimetralen Bereich (12) eindringt, wobei die erste Trennfläche (11) konkav ist, wenn sie von der Eintrittsfläche (8) aus betrachtet wird,
[f] wobei der zentrale Abschnitt (26) des Lichtstrahls dazu geeignet ist, sich entlang des zweiten Bereichs (18), des dritten Bereichs (15), des vierten Bereichs (21) und des fünften Bereichs (19) fortzubewegen, wobei er durch zentrale Teile der zweiten, dritten und vierten Trennflächen und einen zentralen Teil der Austrittsfläche (9) geht, wobei der zentrale Teil der zweiten Trennfläche (16) konvex ist, wenn er von der Eintrittsfläche (8) aus betrachtet wird, der zentrale Teil der dritten Trennfläche (17) konvex ist, wenn er von der Eintrittsfläche (8) aus betrachtet wird, der zentrale Teil der vierten Trennfläche (20) konkav ist, wenn er von der Eintrittsfläche (8) aus betrachtet wird, und der zentrale Teil der Austrittsfläche (9) konvex ist, wenn er von der Eintrittsfläche (8) aus betrachtet wird, und
[g] wobei der perimetrale Abschnitt (27) des Lichtstrahls dazu geeignet ist, sich entlang des sechsten Bereichs (12), des dritten Bereichs (15), des vierten Bereichs (21) und des fünften Bereichs (19) fortzubewegen, wobei er durch ringförmige perimetrale Teile der dritten und vierten Trennflächen und einen ringförmigen perimetralen Teil der Austrittsfläche (9) geht, wobei mehr als 50% des perimetralen Abschnitts (27) des Lichtstrahls, und vorzugsweise mehr als 75%, an der äußeren Seitenfläche (14) reflektiert wird und, einmal reflektiert, sich entlang des dritten Bereichs (15) fortbewegt und durch den ringförmigen perimetralen Teil der dritten Trennfläche (17) geht.

2. Optisches System nach Anspruch 1, **gekennzeichnet dadurch, dass** der zentrale Teil der dritten Trennfläche (17) eine sphärische Fläche ist und der ringförmige perimetrale Teil der dritten Trennfläche (17) eine konkave Fläche ist, wenn sie von der Eintrittsfläche (8) aus betrachtet werden.

3. Optisches System nach Anspruch 2, **gekennzeichnet dadurch, dass** jeder Längsschnitt des ringförmigen perimetralen Teils der dritten Trennfläche (17) entsprechend einer Ebene, die die optische Achse enthält, ein Kreisbogen ist, dessen Mittelpunkt außerhalb der optischen Achse liegt.

4. Optisches System nach einem der Ansprüche 1 bis 3, **gekennzeichnet dadurch, dass** der zentrale Teil der vierten Trennfläche (20) und der ringförmige perimetrale Teil der vierten Trennfläche (20) eine sphärische Fläche bilden.

5. Optisches System nach einem der Ansprüche 1 bis 4, **gekennzeichnet dadurch, dass** der zentrale Teil der Austrittsfläche (9) eine sphärische Fläche ist und der ringförmige perimetrale Teil der Austrittsfläche (9) konisch koaxial mit der optischen Achse ist und sich zur Austrittsfläche (9) hin öffnet.

6. Optisches System nach einem der Ansprüche 1 bis 5, **gekennzeichnet dadurch, dass** die fünfte Trennfläche (13) eine konische Fläche koaxial mit der optischen Achse ist und sich zur Austrittsfläche (9) hin öffnet und vorzugsweise einen Öffnungswinkel zwischen 51° und 56°, und sehr vorzugsweise einen Öffnungswinkel zwischen 53° und 54° aufweist.

7. Optisches System nach einem der Ansprüche 1 bis 6, **gekennzeichnet dadurch, dass** die äußere Seitenfläche (14) eine konkave Fläche ist, wenn sie von der Innenseite des zweiten Bereichs (18) aus betrachtet wird.

8. Optisches System nach einem der Ansprüche 1 bis 7, **gekennzeichnet dadurch, dass** es Rotationssymmetrie bezüglich der optischen Achse aufweist.

9. Optisches System nach einem der Ansprüche 1 bis 8, **gekennzeichnet dadurch, dass** das Material des zweiten Bereichs (18) ein Gas oder eine Mischung von Gasen ist, und das Material des zweiten Bereichs (18) vorzugsweise Luft ist.

10. Optisches System nach einem der Ansprüche 1 bis 9, **gekennzeichnet dadurch, dass** das Material des vierten Bereichs (21) ein Gas oder eine Mischung von Gasen ist, und das Material des vierten Bereichs (21) vorzugsweise Luft ist.

11. Optisches System nach einem der Ansprüche 1 bis 10, **gekennzeichnet dadurch, dass** das Material des ersten Bereichs (10) und des sechsten Bereichs (12) dasselbe Material sind, und das Material vorzugsweise Polycarbonat oder Polymethylmethacrylat ist und sehr vorzugsweise Polycarbonat ist.

12. Optisches System nach Anspruch 11, **gekennzeichnet dadurch, dass** der erste Bereich (10) und der sechste Bereich (12) ein einziges physisches Stück (1) sind.

13. Optisches System nach den Ansprüchen 9 und 11 oder nach den Ansprüchen 9 und 12, **gekennzeichnet dadurch, dass** der dritte Bereich (15) ein physisches Stück (2) unabhängig von dem ersten Bereich (10) und dem sechsten Bereich (12) ist und seine vorderen und hinteren Wände jeweils die zweite und dritte Trennfläche bilden, und wobei in einer Aufbauposition wird ein ringförmiger perimetraler Teil der zweiten Trennfläche (16) auf dem sechsten Bereich (12) gestützt ist, wodurch der Durchgang des Lichtstrahls durch den perimetralen Abschnitts (27) vom sechsten Bereich (12) zum dritten Bereich (15) ermöglicht wird und es, in der Aufbauposition, einen Hohlraum gibt, der den zweiten Bereich (18) zwischen der ersten Trennfläche (11) und der zweiten Trennfläche (16) definiert.

14. Optisches System nach Anspruch 10 oder Anspruch 13, wenn er von Anspruch 10 abhängt, **gekennzeichnet dadurch, dass** der fünfte Bereich (19) ein physisches Stück (3) unabhängig vom dritten Bereich (15) ist und seine vorderen und hinteren Wände jeweils die vierte Trennfläche (20) und die Austrittsfläche (9) bilden, und der fünfte Bereich (19) in einer Aufbauposition auf dem dritten Bereich (15) gestützt ist und es in der Aufbauposition einen Hohlraum gibt, der den vierten Bereich (21) zwischen der dritten Trennfläche (17) und der vierten Trennfläche (20) definiert.

15. Optisches System nach den Ansprüchen 12, 13 und 14, **gekennzeichnet dadurch, dass** es eine zylindrische Hülse (7) umfasst, die darin die drei physische Stücke (1, 2, 3) aufnimmt, das physische Stück, das den ersten Bereich (10) und den sechsten Bereich (12) bildet, das physische Stück, das den dritten Bereich (15) bildet, und das physische Stück, das den fünften Bereich (19) bildet, wobei zwischen einer inneren Seitenwand der Hülse (7) und der äußeren Seitenfläche (14) ein Raum ist, der einen siebten Bereich (25) definiert, wobei der siebte Bereich (25) mit einem Material mit einem siebten Brechungsindex gefüllt ist, der niedriger ist als der sechste Brechungsindex, wobei das Material des siebten Bereichs (25) vorzugsweise ein Gas oder Polymethylmethacrylat ist.

## Revendications

1. Système optique ayant une surface d'entrée (8) pour l'entrée d'un faisceau de lumière provenant d'une source de lumière (5) et une surface de sortie (9) pour la sortie dudit faisceau de lumière, ledit système optique définissant un axe optique s'étendant de ladite surface d'entrée (8) à ladite surface de sortie (9), ledit système optique comportant :
[a] une première région (10) ayant une matière présentant un premier indice de réfraction, **caractérisé en ce que** ledit système optique présente une deuxième région (18) ayant une matière présentant un deuxième indice de réfraction, une troisième région (15) ayant une matière présentant un troisième indice de réfraction, une quatrième région (21) ayant une matière présentant un quatrième indice de réfraction, et une cinquième région (19) ayant une matière présentant un cinquième indice de réfraction, agencées séquentiellement selon ledit axe optique entre ladite surface d'entrée (8) et ladite surface de sortie (9), et étant coaxiales avec ledit axe optique,
[b] une sixième région périmétrique (12) ayant une matière présentant un sixième indice de réfraction, s'étendant axialement entre ladite première région (10) et ladite troisième région (15) et entourant latéralement ladite deuxième région (18),
[c] une première surface de séparation (11) agencée entre ladite première région (10) et ladite deuxième région (18), une deuxième surface de séparation (16) agencée entre ladite deuxième région (18) et ladite troisième région (15), une troisième surface de séparation (17) agencée entre ladite troisième région (15) et ladite quatrième région (21), une quatrième surface de séparation (20) agencée entre ladite quatrième région (21) et ladite cinquième région (19), une cinquième surface de séparation (13) agencée entre ladite deuxième région (18) et ladite sixième région (12), et une surface latérale externe (14), qui fait face à ladite cinquième surface de séparation (13) et entoure le périmètre de ladite sixième région périmétrique (12) sur la face externe de celle-ci,
[d] dans lequel ledit deuxième indice de réfraction est inférieur auxdits premier, troisième et sixième indices de réfraction, et ledit quatrième indice de réfraction est inférieur auxdits troisième et cinquième indices de réfraction,
[e] dans lequel ledit faisceau de lumière est approprié pour se propager à travers ladite première région (10) de sorte qu'une portion centrale (26) dudit faisceau de lumière traverse ladite première surface de séparation (11) et pénètre dans ladite deuxième région (18) et qu'une portion périmétrique (27) dudit faisceau de lumière pénètre dans ladite sixième région périmétrique (12), dans lequel ladite première surface de séparation (11) est concave lorsqu'elle est observée depuis ladite surface d'entrée (8),
[f] dans lequel ladite portion centrale (26) dudit faisceau de lumière est appropriée pour se propager le long de ladite deuxième région (18), de ladite troisième région (15), de ladite quatrième région (21) et de ladite cinquième région (19), en traversant les parties centrales desdites deuxième, troisième et quatrième surfaces de séparation et une partie centrale de ladite surface de sortie (9), dans lequel ladite partie centrale de ladite deuxième surface de séparation (16) est convexe lorsqu'elle est observée depuis ladite surface d'entrée (8), ladite partie centrale de ladite troisième surface de séparation (17) est convexe lorsqu'elle est observée depuis ladite surface d'entrée (8), ladite partie centrale de ladite quatrième surface de séparation (20) est concave lorsqu'elle est observée depuis ladite surface d'entrée (8), et ladite partie centrale de ladite surface de sortie (9) est convexe lorsqu'elle est observée depuis ladite surface d'entrée (8), et
[g] dans lequel ladite portion périmétrique (27) dudit faisceau de lumière est appropriée pour se propager le long de ladite sixième région (12), de ladite troisième région (15), de ladite quatrième région (21) et de ladite cinquième région (19), en traversant des parties périmétriques annulaires desdites troisième et quatrième surfaces de séparation et une partie périmétrique annulaire de ladite surface de sortie (9), dans lequel plus de 50 % de ladite portion périmétrique (27) dudit faisceau de lumière, et de préférence plus de 75 %, sont réfléchis sur ladite surface latérale externe (14) et, une fois réfléchis, se propagent le long de ladite troisième région (15) et traversent ladite partie périmétrique annulaire de ladite troisième surface de séparation (17).

2. Système optique selon la revendication 1, **caractérisé en ce que** ladite partie centrale de ladite troisième surface de séparation (17) est une surface sphérique et ladite partie périmétrique annulaire de ladite troisième surface de séparation (17) est une surface concave lorsqu'elle est observée depuis ladite surface d'entrée (8).

3. Système optique selon la revendication 2, **caractérisé en ce que** toute section longitudinale de ladite partie périmétrique annulaire de ladite troisième surface de séparation (17) selon un plan contenant ledit axe optique est un arc circulaire dont le centre est hors dudit axe optique.

4. Système optique selon l'une quelconque des revendications 1 à 3, **caractérisé en ce que** ladite partie centrale de ladite quatrième surface de séparation (20) et ladite partie périmétrique annulaire de ladite quatrième surface de séparation (20) forment une surface sphérique.

5. Système optique selon l'une quelconque des revendications 1 à 4, **caractérisé en ce que** ladite partie centrale de ladite surface de sortie (9) est une surface sphérique et ladite partie périmétrique annulaire de ladite surface de sortie (9) est conique, coaxiale avec ledit axe optique et s'ouvrant vers ladite surface de sortie (9).

6. Système optique selon l'une quelconque des revendications 1 à 5, **caractérisé en ce que** ladite cinquième surface de séparation (13) est une surface conique coaxiale avec ledit axe optique et s'ouvrant vers ladite surface de sortie (9), et présente de préférence un angle d'ouverture compris entre 51° et 56° et, plus préférentiellement, un angle d'ouverture compris entre 53° et 54°.

7. Système optique selon l'une quelconque des revendications 1 à 6, **caractérisé en ce que** ladite surface latérale externe (14) est une surface concave lorsqu'elle est observée depuis l'intérieur de ladite deuxième région (18).

8. Système optique selon l'une quelconque des revendications 1 à 7, **caractérisé en ce qu'**il présente une symétrie de révolution par rapport audit axe optique.

9. Système optique selon l'une quelconque des revendications 1 à 8, **caractérisé en ce que** ladite matière de la deuxième région (18) est un gaz ou un mélange de gaz, et, de préférence, ladite matière de ladite deuxième région (18) est de l'air.

10. Système optique selon l'une quelconque des revendications 1 à 9, **caractérisé en ce que** ladite matière de ladite quatrième région (21) est un gaz ou un mélange de gaz, et, de préférence, ladite matière de ladite quatrième région (21) est de l'air.

11. Système optique selon l'une quelconque des revendications 1 à 10, **caractérisé en ce que** ladite matière de ladite première région (10) et ladite matière de ladite sixième région (12) sont la même matière, et, de préférence, ladite matière est un polycarbonate ou un polyméthacrylate de méthyle, et très préférentiellement un polycarbonate.

12. Système optique selon la revendication 11, **caractérisé en ce que** ladite première région (10) et ladite sixième région (12) forment une seule pièce physique (1).

13. Système optique selon les revendications 9 et 11 ou selon les revendications 9 et 12, **caractérisé en ce que** ladite troisième région (15) est une pièce physique (2) indépendante de ladite première région (10) et de ladite sixième région (12), et les parois avant et arrière de celle-ci forment respectivement les deuxième et troisième surfaces de séparation, et, dans une position de montage, une partie périmétrique annulaire de ladite deuxième surface de séparation (16) est supportée sur ladite sixième région (12), permettant le passage de ladite portion périmétrique (27) dudit faisceau de lumière depuis ladite sixième région (12) vers ladite troisième région (15), et, dans ladite position de montage, il existe une cavité creuse définissant ladite deuxième région (18) entre ladite première surface de séparation (11) et ladite deuxième surface de séparation (16).

14. Système optique selon la revendication 10 ou la revendication 13 lorsqu'elle dépend de la revendication 10, **caractérisé en ce que** ladite cinquième région (19) est une pièce physique (3) indépendante de ladite troisième région (15) et les parois avant et arrière de celle-ci forment respectivement ladite quatrième surface de séparation (20) et ladite surface de sortie (9), et, dans une position de montage, ladite cinquième région (19) est supportée sur ladite troisième région (15) et, dans ladite position de montage, il existe une cavité creuse définissant ladite quatrième région (21) entre ladite troisième surface de séparation (17) et ladite quatrième surface de séparation (20).

15. Système optique selon les revendications 12, 13 et 14, **caractérisé en ce qu'**il comprend un manchon cylindrique (7) logeant dans celui-ci lesdites trois pièces physiques (1, 2, 3), la pièce physique formant ladite première région (10) et ladite sixième région (12), la pièce physique formant ladite troisième région (15), et la pièce physique formant ladite cinquième région (19), dans lequel entre une paroi latérale interne dudit manchon (7) et ladite surface latérale externe (14), il existe un espace définissant une septième région (25), dans lequel ladite septième région (25) est remplie avec une matière présentant un septième indice de réfraction qui est inférieur audit sixième indice de réfraction, dans lequel ladite matière de ladite septième région (25) est de préférence un gaz ou un polyméthacrylate de méthyle.
